# EUROPÄISCHE PATENTSCHRIFT

(11) **EP 4 225 587 B1**
(45) Veröffentlichungstag und Bekanntmachung des Hinweises auf die Patenterteilung: **21.01.2026**
(21) Anmeldenummer: 21783228.6
(22) Anmeldetag: 24.09.2021
(51) Int. Cl.: B44C 5/04, B44F 1/04, B44C 1/22, B29C 45/14

(54) **ANORDNUNG AUS EINER LICHTQUELLE UND EINER DEKORBLENDE MIT VERBESSERTER OPTISCHER TIEFENWIRKUNG EINER DREIDIMENSIONALEN OBERFLÄCHENKONTUR**
SYSTEM COMPRISING A LIGHT SOURCE AND A DECORATIVE COVER HAVING IMPROVED OPTICAL DEPTH EFFECT OF A THREE-DIMENSIONAL SURFACE CONTOUR
SYSTÈME COMPRENANT UNE SOURCE LUMINEUSE ET UN COUVERCLE DÉCORATIF AYANT UN EFFET DE PROFONDEUR OPTIQUE AMÉLIORÉ D'UN CONTOUR DE SURFACE TRIDIMENSIONNEL

(30) Priorität: 07.12.2020 DE 102020132452
(43) Veröffentlichungstag der Anmeldung: 16.08.2023
(73) Patentinhaber: Preh GmbH, 97616 Bad Neustadt a.d. Saale (DE)
(72) Erfinder: LOCHNER, Peter, 97618 Wollbach (DE); LUST, Matthias, 97456 Dittelbrunn (DE)
(74) Vertreter: Lohmanns, Bernard
(86) Internationale Anmeldenummer: PCT/EP2021/076292
(87) Internationale Veröffentlichungsnummer: WO 2022/122210

(56) Entgegenhaltungen:
- EP-A2- 2 006 119
- WO-A1-2020/095554
- JP-A- 2008 284 713
- US-A1- 2011 281 074

## Beschreibung

Die Erfindung betrifft eine Anordnung aus einer Lichtquelle und einer Dekorblende. Dekorblenden werden beispielsweise als Innenraumverkleidung in der Fahrgastzelle eines Kraftfahrzeugs verwendet. Neben einer ausreichenden Abriebfestigkeit und Haltbarkeit trotz starker Temperaturschwankungen und direkter Sonnenlichtaussetzung ist eine optisch und haptisch attraktive Sichtfläche der Blende erwünscht. Als optisch attraktiv wird eine Blende angesehen, bei der eine visuell erkennbare dreidimensionale Oberflächenkontur aus dem Blickwinkel des Betrachters deutlich zu erkennen ist, auch wenn der transparente oder zumindest transluzente Träger, in den die Oberflächenkontur eingebracht ist, aus Stabilitäts- und/oder Haltbarkeitsgründen vergleichsweise dick ist. Dabei stellt sich das Problem, dass bei seitlicher Betrachtung die durch die dreidimensionale Oberfläche gewünschte Tiefenwirkung für den Betrachter verloren geht, was unter ästhetischen Gesichtspunkten und insbesondere unter dem Ziel, den visuellen Eindruck eines naturgetreuen Imitats beim Betrachter hervorzurufen, nachteilig ist. Die Strategie, den visuellen Eindruck beim Betrachter dadurch zu erhalten, dass die Oberflächenkontur in ihrer Tiefe ausgeprägter, beispielsweise im Vergleich zu ihrem natürlichen Tiefenprofil tiefer, in den Träger einzubringen, kann die Haltbarkeit der Dekorblende in Frage stellen und birgt somit ein Verletzungsrisiko. Darüber hinaus besteht das allgemeine Gebot, Gewicht im Kraftfahrzeugbau einzusparen, also die Dekorblende bei möglichst minimaler Dicke zu realisieren.

Aus der EP 2 006 119 A2 ist eine Anordnung gemäß dem Oberbegriff des Anspruchs 1 bekannt. Gattungsgemäße Anordnungen sind ferner aus der US 2011/281074 A1, der JP 2008 284713 A sowie der WO 2020/095554 A1 bekannt.

Vor diesem Hintergrund bestand Bedarf nach einer Lösung für eine Anordnung aus einer Lichtquelle und einer optisch verbesserten und haltbareren Dekorblende mit dreidimensionaler Oberfläche. Diese Aufgabe wird durch eine Anordnung gemäß Anspruch 1 gelöst. Vorteilhafte Ausgestaltungen sind jeweils Gegenstand der abhängigen Ansprüche. Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Offenbart wird ein Verfahren zur Herstellung einer Dekorblende mit den folgenden Schritten.

In einem Erzeugungsschritt wird ein transparenter oder transluzenter Träger erzeugt, der bei bestimmungemäßer Anbringung eine einem Betrachter zugewandte Sichtfläche und eine dem Betrachter abgewandte Rückfläche definiert. Dabei müssen weder die Sichtfläche noch die Rückfläche jeweils zwingend die rückwärtig äußersten Oberflächen der fertiggestellten Dekorblende sein, sondern der Träger kann ferner neben den zwingend vorzusehenden Schichten zusätzliche Beschichtungen aufweisen, beispielsweise eine die Oberfläche mechanisch schützende und/oder die optischen Eigenschaften verbessernde Beschichtung, die die Sichtfläche des Trägers ausbilden. Der Träger kann einteilig oder mehrteilig sein, beispielsweise ist er aus mehreren stoffschlüssig verbundenen Komponenten ausgebildet.

Es wird mittels eines formgebenden Verfahrensschritts und/oder unter Anwendung eines ablativen Bearbeitungsschritts eine der Oberflächen aus Sichtfläche und Rückfläche mit einer dreidimensionalen Oberflächenkontur versehen, wobei die Oberflächenkontur bezüglich einer Bezugsebene durch eine Höhenkoordinate beschreibbar ist. Die Bezugsebene erstreckt sich beispielsweise parallel zu einer durch die zwei orthogonalen Haupterstreckungsrichtungen des Trägers aufgespannte Ebene oder entspricht der durch die zwei orthogonalen Haupterstreckungsrichtungen aufgespannte Ebene. In einer anderen Ausgestaltung, ist die Bezugsebene so ausgerichtet, dass die Blickrichtung des Betrachters aus dessen bestimmungsgemäßer Position im Fahrzeug, beispielsweise auf dem Fahrersitz sitzend, auf den geometrischen Mittelpunkt der Sichtfläche im Wesentlichen orthogonal zur Bezugsebene ist.

In einem mindestens einmalig durchgeführten Bedruckungsschritt des erfindungsgemäßen Verfahrens erfolgt ein Bedrucken entweder der Rückfläche oder der Sichtfläche des Trägers, um eine Effektschicht auszubilden, die so ausgebildet ist, dass für eine Vielzahl von Stellen der Effektschicht Folgendes gilt: der lokale Transmissionsgrad und/oder lokale Farbwert an der jeweiligen Stelle korreliert mit der Höhenkoordinate desjenigen Punktes, dessen senkrechte Projektion auf die Bezugsebene mit der senkrechten Projektion der Stelle auf die Bezugsebene zusammenfällt. Der Begriff Höhenkoordinate soll nicht einschränkend verstanden werden und kann auch ohne den Bedeutungsinhalt zu verändern als Tiefenkoordinate bezeichnet werden. Durch die spezifische auf die Oberflächenkontur der strukturierten Oberfläche angepasste Bedruckung wird somit eine verbesserte optische Tiefenwirkung erreicht. Bei gleicher optischer Tiefenwirkung kann gegenüber einer unbedruckten Variante die mittlere Rautiefe der Oberflächenkontur verringert werden, was weitergehend die Option einräumt, bei gleicher verbleibender Restdicke an der Stelle der größten Tiefe Materialstärke am Träger und damit Gewicht des Trägers einzusparen. Dadurch, dass bei annähernd gleicher optischer Tiefenwirkung, nämlich aufgrund der durch die Effektschicht bewirkten Verstärkung, die mittlere Rautiefe der dreidimensionalen Oberflächenkontur verringert werden kann, wird die Bruchgefahr des Trägers und somit die Verletzungsgefahr verringert.

Als dreidimensionale Oberflächenkontur wird beispielsweise eine flächige Aneinanderreihung einer diamantartigen Struktur verstanden, die sich durch ebene Flächen auszeichnet, die in gewinkeltem Zustand zueinanderstehen und gemeinsame geradlinige Kanten an den Übergängen der aneinandergrenzenden Flächen ausbilden. In anderen Ausgestaltungen bildet die Oberflächenkontur die Kontur natürlicher oder künstlicher Konturen nach, wie eine Holzmaserung insbesondere dessen Porenverteilung, eine Steinoberfläche, insbesondere dessen Rissbildung, eine Carbonfaserverbundstruktur, eine Oberfläche eines gewebten Stoffes und Dergleichen. Beispielsweise sind mehrere Bedruckungsschritte vorgesehen, um die Oberflächenkontur durch ein oder mehrere, insgesamt ein Dekor ergebende Effektschichten, beispielsweise ein mehrfarbiges Dekor ergebend, zu ergänzen, beispielsweise das Dekor einer Holzmaserung, einer Steinoberfläche, einer Carbonfaserverbundstruktur, einer Stoffoberfläche.

Beispielsweise ist vorgesehen, dass der ablative Bearbeitungsschritt eine Laserablationsbearbeitung eines formgebenden Werkzeugs zur Herstellung des Trägers als Formling beinhaltet. Beispielsweise wird der Träger aus einem Thermoplast in dem formgebenden Werkzeug, welches zuvor durch Laserablation oberflächenbearbeitet wurde, thermisch ausgeformt und geprägt. In einer anderen Ausgestaltung wird der Formling nachträglich durch Laserablation oberflächenbearbeitet.

Beispielsweise wird u.a. die Höhenkoordinate aus dem bei der Positionieransteuerung der Laserablationsvorrichtung verwendeten Datensatz, also während der Laserablation, erhalten. Bevorzugt wird die Höhenkoordinate durch eine vor dem Bedrucken durchgeführte Oberflächenabtastung, beispielsweise eine Laseroberflächenabtastung, der mit der Oberflächenkontur versehenen Oberfläche aus Rückfläche oder Sichtfläche erhalten.

Beispielsweise ist ferner ein Beschichtungsschritt vorgesehen, bei dem eine, bevorzugt im Wesentlichen homogen ausgebildete, opake Reflexionsschicht, rückwärtig, d.h. auf den Träger, angrenzend an den Träger oder an die äußere der Effektschichten, sofern nur eine Effektschicht vorhanden ist, angrenzend an die Effektschicht aufgebracht wird. Beispielsweise ist die Reflexionsschicht im Wesentlichen weiß eingefärbt. Bevorzugt sind reflexionssteigernde Einlagerung in die Reflexionsschicht eingebettet, um Licht in den Träger zurückzureflektieren. Als rückwärtige Aufbringung wird eine Aufbringung auf die Seite des Trägers bzw. die Effektschicht verstanden, die dem Betrachter bei bestimmungsgemäßer Anordnung der Blende abgewandt ist.

Beispielsweise wird der Träger durch Hinterspritzen einer Folie aus einem ersten transparenten Thermoplast mit einem zweiten transparenten Thermoplast in dem formgebenden Verfahrensschritt hergestellt, wodurch eine stoffschlüssige Verbindung zwischen der Folie und dem zweiten Thermoplast erreicht wird. Beispielsweise bildet die Folie, die für die Bedruckung mit der Effektschicht bestimmte Oberfläche aus. Bevorzugt handelt es sich bei der Folie um eine Polycarbonatfolie. Beispielsweise wird die Folie vor dem Hinterspritzen bedruckt, um die Effektschicht auszubilden.

In einer Ausgestaltung ist der Transmissionsgrad und/oder Farbwert aller Stellen der dreidimensionalen Oberflächenkontur durch die jeweilige Höhenkoordinate der aufgrund der gemeinsamen Projektion entsprechenden Position vorgegeben. In einer anderen Ausgestaltung weisen ausgewählte Stellen der Effektschicht einen spezifischen Transmissionsgrad und/oder Farbwert auf. Beispielsweise weisen diejenigen Stellen, die bei senkrechter Projektion mit einer Kante der Oberflächenkontur zusammenfallen einen spezifischen von der Höhenkoordinate unabhängigen Farbwert auf, um so eine Kantenbetonung zu erreichen. Als Kante wird ein sich im Wesentlichen linear erstreckender Übergang zwischen zwei im Winkel zueinanderstehenden Flächen verstanden, wobei die Kante eine Talsenke oder einen Gipfelgrat in der "Landschaft" der Oberflächenkontur ausbilden kann.

Gemäß einer Variante des Verfahrens ist vorgesehen, dass sich zumindest die Stellen der Effektschicht, die mit den Punkten lokaler maximaler Höhenkoordinate bei gemeinsamer senkrechte Projektion auf die Bezugsebene zusammenfallen und die Stellen der Effektschicht, die mit den Punkten lokaler minimaler Höhenkoordinate bei gemeinsamer senkrechte Projektion auf die Bezugsebene zusammenfallen, im Transmissionsgrad und/oder im Farbwert unterscheiden, beispielsweise in einer maximal vorgegebenen Differenz, unterscheiden. Dadurch wird eine ausgeprägte optische Tiefenwirkung hervorgerufen. Beispielsweise erscheinen die aus Sicht des Betrachters vorhandenen Talsenken in der Oberflächenkontur der Sichtfläche oder in der durch das Trägermaterial sichtbaren Rückfläche aufgrund von örtlich zugeordnetem spezifischen Transmissionsgrad und/oder Farbwert im Vergleich zu der verbleibenden Landschaft der Oberflächenkontur dunkler und die Gipfelgraten entsprechend heller oder umgekehrt.

Beispielsweise wird die Effektschicht durch Rasterbedruckung ausgebildet.

Beispielsweise ist vorgesehen, dass mehrere benachbarte Stellen vorgesehen sind, deren Transmissionsgradänderung mit der zugehörigen Höhenkoordinatenänderung positiv oder negativ korreliert. Beispielsweise ist deren Transmissionsgradänderung dabei proportional zur Höhenkoordinatenänderung.

Die Erfindung betrifft eine Anordnung aus einer Lichtquelle und einer Dekorblende. Letztere weist einen transparenten oder transluzenten Träger auf, der bei bestimmungemäßer Anbringung eine einem Betrachter zugewandte Sichtfläche und eine dem Betrachter abgewandte Rückfläche definiert. Dabei bildet eine Rückfläche eine dreidimensionale Oberflächenkontur aus, die bezüglich einer Bezugsebene durch eine Höhenkoordinate beschreibbar ist. Die Bezugsebene erstreckt sich beispielsweise parallel zu einer durch die zwei orthogonalen Haupterstreckungsrichtungen des Trägers aufgespannte Ebene oder entspricht der durch die zwei orthogonalen Haupterstreckungsrichtungen aufgespannte Ebene. In einer anderen Ausgestaltung, ist die Bezugsebene so ausgerichtet, dass die Blickrichtung des Betrachters aus dessen bestimmungsgemäßer Position im Fahrzeug, beispielsweise auf dem Fahrersitz sitzend, auf den geometrischen Mittelpunkt der Sichtfläche im Wesentlichen orthogonal zur Bezugsebene ist. Der Träger weist zwei gegenüberliegenden Hauptflächen auf, die an Schmalseiten des Trägers über Stirnflächen verbunden sind, wobei eine der Stirnflächen der Lichtquelle zugewandt ist, um Licht in den Träger als Lichtleiter einzukoppeln und dass die Oberflächenkontur aufgrund lichtbrechender Effekte durch den Träger sichtbar ist.

Die erfindungsgemäße Dekorblende weist ferner wenigstens eine Effektschicht auf, die jeweils entweder auf der Rückfläche oder der Sichtfläche des Trägers aufgebracht ist. Dabei ist die Effektschicht so ausgebildet, dass für eine Vielzahl von Stellen der Effektschicht Folgendes gilt: der lokale Transmissionsgrad an der jeweiligen Stelle korreliert mit der Höhenkoordinate desjenigen Punktes, dessen senkrechte Projektion auf die Bezugsebene mit der senkrechten Projektion der Stelle auf die Bezugsebene zusammenfällt. Durch die spezifische auf die Oberflächenkontur der strukturierten Oberfläche angepasste Effektschicht wird somit eine verbesserte optische Tiefenwirkung erreicht. Bei gleicher optischer Tiefenwirkung kann gegenüber einer unbedruckten Variante die gemittelte Rautiefe der Oberflächenkontur verringert werden, was weitergehend die Option einräumt, bei gleicher Bruchsicherheit Materialstärke am Träger und damit Gewicht des Trägers einzusparen. Dadurch, dass bei gleicher optischer Tiefenwirkung die mittlere Rautiefe der dreidimensionalen Oberflächenkontur verringert werden kann, wird die Bruchgefahr des Trägers und somit die Verletzungsgefahr verringert.

Bevorzugt ist eine rückwärtig auf den Träger aufgebrachte, bevorzugt im Wesentlichen homogen ausgebildete, opake Reflexionsschicht vorgesehen. Beispielsweise ist die Reflexionsschicht im Wesentlichen weiß eingefärbt. Bevorzugt sind reflexionssteigernde Einlagerung in die Reflexionsschicht eingebettet. Als rückwärtige Aufbringung wird eine Aufbringung auf die Seite des Trägers bzw. der Effektschicht verstanden, die dem Betrachter bei bestimmungsgemäßer Anordnung der Blende abgewandt ist, um Licht in den Träger zurück zu reflektieren.

In einer Ausgestaltung ist der Transmissionsgrad und/oder Farbwert aller Stellen der dreidimensionalen Oberflächenkontur von Sichtfläche bzw. Rückfläche durch die jeweilige Höhenkoordinate der aufgrund der gemeinsamen Projektion entsprechenden Position vorgegeben. In einer anderen Ausgestaltung weisen ausgewählte Stellen der Effektschicht einen spezifischen Transmissionsgrad und/oder Farbwert auf. Beispielsweise weisen diejenigen Stellen, die bei senkrechter Projektion mit einer Kante der Oberflächenkontur zusammenfallen einen spezifischen von der Höhenkoordinate unabhängigen Farbwert auf, um so eine Kantenbetonung zu erreichen. Als Kante wird ein sich im Wesentlichen linear erstreckender Übergang zwischen zwei im Winkel zueinanderstehenden, ebenen Flächen verstanden, wobei die Kante eine Talsenke oder einen Gipfelgrat in der "Landschaft" der Oberflächenkontur ausbilden kann.

Gemäß einer bevorzugten Ausgestaltung der Dekorblende ist vorgesehen, dass sich zumindest die Stellen der Effektschicht, die mit den Punkten lokaler maximaler Höhenkoordinate der Oberflächenkontur bei gemeinsamer senkrechte Projektion auf die Bezugsebene zusammenfallen und die Stellen der Effektschicht, die mit den Punkten lokaler minimaler Höhenkoordinate der Oberflächenkontur bei gemeinsamer senkrechte Projektion auf die Bezugsebene zusammenfallen, im Transmissionsgrad unterscheiden, bevorzugt in einer maximal vorgegebenen Differenz, unterscheiden. Dadurch wird eine ausgeprägte optische Tiefenwirkung hervorgerufen. Beispielsweise erscheinen die aus Sicht des Betrachters vorhandenen Talsenken in der Oberflächenkontur der Sichtfläche oder in der durch das Trägermaterial sichtbaren Rückfläche aufgrund von örtlich zugeordnetem spezifischen Transmissionsgrad und/oder Farbwert im Vergleich zu der verbleibenden Landschaft der Oberflächenkontur dunkler und die Gipfelgraten entsprechend heller oder umgekehrt.

Bevorzugt ist vorgesehen, dass mehrere benachbarte Stellen vorgesehen sind, deren Transmissionsgradänderung mit der zugehörigen Höhenkoordinatenänderung positiv oder negativ korreliert. Bevorzugt ist deren Transmissionsgradänderung dabei proportional zur Höhenkoordinatenänderung.

Bevorzugt weist der Träger eine transparente Folie und eine stoffschlüssig mit der Folie verbundene, transparente Kunststoffschicht auf.

Bevorzugt ist die Effektschicht durch Rasterbedruckung ausgebildet.

Die Erfindung wird anhand der nachfolgenden Figuren näher erläutert. Die Figuren sind dabei nur beispielhaft zu verstehen und stellen lediglich bevorzugte Ausführungsvarianten dar. Es zeigen:
- Fig. 1: eine perspektivische Ansicht einer nicht erfindungsgemäßen Anordnung;
- Fig. 2: eine perspektivische Ansicht einer ersten erfindungsgemäßen Anordnung aus einer Lichtquelle 10 und einer ersten Ausführungsform der Dekorblende 1;
- Fig. 3: eine Ansicht zur Erläuterung des Herstellungsschrittes des Werkzeugs wie er in dem Verfahren zum Herstellen der Dekorblende zur Anwendung kommt;
- Fig. 4: eine Schnittansicht einer zweiten, erfindungsgemäßen Anordnung aus der Lichtquelle 10 und einer durch das Verfahren hergestellten zweiten Ausführungsform der Dekorblende 1;
- Fig. 5: eine Schnittansicht einer erfindungsgemäßen, dritten Anordnung aus der Lichtquelle 10 und einer durch das Verfahren hergestellten dritten Ausführungsform der Dekorblende 1.

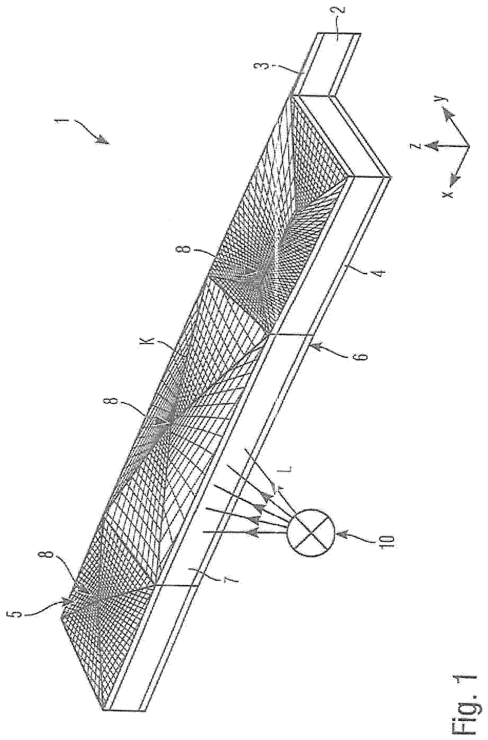

Figur 1 ist eine perspektivische Ansicht einer nicht erfindungsgemäßen Anordnung, die eine Lichtquelle 10 und eine Dekorblende zeigt. Die Dekorblende 1 umfasst einen Träger 2 aus einem transparenten Thermoplast. Der Träger 2 weist eine flächenmäßige Ausgestaltung mit im Wesentlichen zwei gegenüberliegenden Hauptflächen auf, die an den Schmalseiten des Trägers 2 über Stirnflächen verbunden sind. Eine der Stirnflächen 7 ist einer lediglich symbolisch dargestellten Lichtquelle 10 zugewandt, um das Licht L in den transparenten Träger 2 als Lichtleiter einzukoppeln. Bei bestimmungemäßer Anbringung der Dekorblende 1 weist der Träger 2 eine einem nicht dargestellten Betrachter zugewandte Sichtfläche 5 und eine dem Betrachter abgewandte Rückfläche 6 auf. Generell bildet eine der Oberflächen aus Sichtfläche 5 und Rückfläche 6 eine dreidimensionale Oberflächenkontur K aus, die bezüglich einer Bezugsebene durch eine Höhenkoordinate beschreibbar ist und entweder für den Betrachter unmittelbar oder durch das Material des Trägers hindurch, beispielsweise aufgrund lichtbrechender Effekte sichtbar ist.

In der in Figur 1 gezeigten, Dekorblende 1 weist die Sichtfläche 5 die Oberflächenkontur K auf, die hier durch in gewinkelter Anordnung zueinander stehende, ebene, unter Ausbildung geradliniger Kanten aneinandergrenzende Flächen gekennzeichnet ist. Die Bezugsebene ist beispielsweise eine von den zwei orthogonalen Haupterstreckungsrichtungen X, Y des Trägers 2 aufgespannte Ebene, während die Höhenkoordinate eines Punktes auf der mit der Oberflächenkontur versehenen Sichtfläche 5 beispielsweise der in z-Richtung bestimmte Abstand des Punktes zu dieser Ebene ist.

Die Dekorblende 1 weist ferner wenigstens eine Effektschicht 3 auf, die jeweils in Abhängigkeit dessen, wo die Oberflächenkontur vorgesehen ist, entweder auf der Rückfläche 6 oder der Sichtfläche 5 des Trägers 2 aufgebracht ist. Dabei ist die Effektschicht 3 so ausgebildet, dass für eine Vielzahl von Stellen der Effektschicht 3 Folgendes gilt: der lokale Transmissionsgrad und/oder der lokale Farbwert an der jeweiligen Stelle der Effektschicht 3 korreliert mit der Höhenkoordinate desjenigen Punktes der Oberflächenkontur K, dessen senkrechte Projektion auf die Bezugsebene mit der senkrechten Projektion dieser jeweiligen Stelle der Effektschicht 3 auf die Bezugsebene zusammenfällt. Durch die spezifische, auf die Oberflächenkontur K der Sichtfläche 5 angepasste Effektschicht 3 wird somit eine verbesserte optische Tiefenwirkung erreicht. Bei gleicher optischer Tiefenwirkung kann gegenüber einer unbedruckten Variante die maximale Rautiefe der Oberflächenkontur K verringert werden, was weitergehend die Option einräumt, bei gleicher verbleibender Restdicke zumindest an der oder den Stellen der größten Tiefe Materialstärke am Träger 2 und damit Gewicht des Trägers 2 einzusparen. Dadurch, dass bei gleicher optischer Tiefenwirkung die mittlere Rautiefe der dreidimensionalen Oberflächenkontur K verringert werden kann, wird die Bruchgefahr des Trägers 2 und somit die Verletzungsgefahr verringert.

Ferner ist eine rückwärtig angeordnete, auf die Rückfläche 6 des Träger 2 aufgebrachte, im Wesentlichen homogen ausgebildete, opake Reflexionsschicht 4 vorgesehen. Beispielsweise ist die Reflexionsschicht 4 im Wesentlichen weiß eingefärbt. Es ist vorgesehen, dass sich zumindest die Stellen der Effektschicht 3, die mit den Punkten lokaler maximaler Höhenkoordinate h der Oberflächenkontur K bei gemeinsamer senkrechte Projektion auf die Bezugsebene zusammenfallen und die Stellen der Effektschicht, die mit den Punkten lokaler minimaler Höhenkoordinate h der Oberflächenkontur K bei gemeinsamer senkrechte Projektion auf die Bezugsebene zusammenfallen, im Transmissionsgrad unterscheiden. So ist an den Stellen der Effektschicht 3, denen jeweils die lokal tiefste Position der Oberflächenkontur K aufgrund der Projektion entspricht, ein hoher Transmissionsgrad zugeordnet und entsprechend den Stellen der Effektschicht 3 denen jeweils die lokal höchsten Position der Oberflächenkontur K aufgrund der Projektion entspricht, ein niedriger Transmissionsgrad zugeordnet. Der unterschiedliche Transmissionsgrad wird beispielsweise durch unterschiedliche Druckdichte der die Effektschicht 3 ausbildenden Rasterbedruckung erreicht. Dadurch wird eine ausgeprägte optische Tiefenwirkung hervorgerufen, da die Talsenken aufgrund des Transmissionsgrad im Vergleich zu der verbleibenden Landschaft der Oberflächenkontur optisch heller und die Gipfelgrate entsprechend optisch dunkler erscheinen.

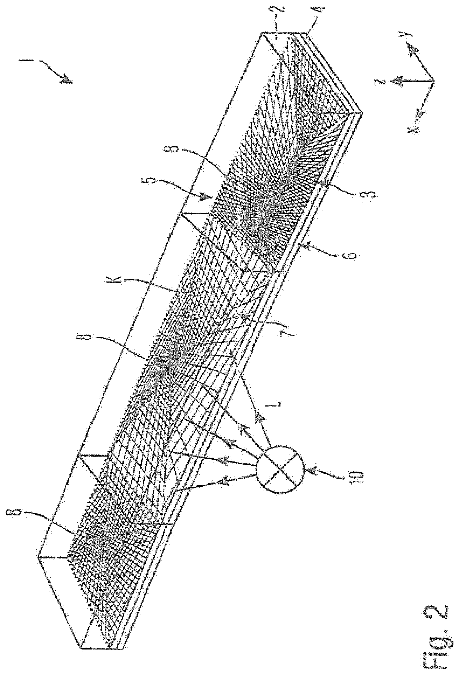

Figur 2 ist eine perspektivische Ansicht einer ersten Ausführungsform der erfindungsgemäßen Anordnung, die eine Lichtquelle 10 und eine Dekorblende in einer ersten Ausführungsform zeigt. Die Dekorblende 1 umfasst einen Träger 2 aus einem transparenten Thermoplast. Der Träger 2 weist eine flächenmäßige Ausgestaltung mit im Wesentlichen zwei gegenüberliegenden Hauptflächen auf, die an den Schmalseiten des Trägers 2 über Stirnflächen verbunden sind. Eine der Stirnflächen 7 ist einer lediglich symbolisch dargestellten Lichtquelle 10 zugewandt, um das Licht L in den transparenten Träger 2 als Lichtleiter einzukoppeln. Bei bestimmungemäßer Anbringung der Dekorblende 1 weist der Träger 2 eine einem nicht dargestellten Betrachter zugewandte Sichtfläche 5 und eine dem Betrachter abgewandte Rückfläche 6 auf. Erfindungsgemäß bildet die Rückfläche 6 eine dreidimensionale Oberflächenkontur K aus, die bezüglich einer Bezugsebene durch eine Höhenkoordinate beschreibbar ist. In der in Figur 2 gezeigten, ersten Ausführungsform der Dekorblende 1 weist die Rückfläche 6 des Trägers 2 die Oberflächenkontur K auf, die hier durch im gewinkelte, ebene, unter Ausbildung geradliniger Kanten aneinandergrenzende Flächen gekennzeichnet ist. In dieser ersten

Ausführungsform ist die Oberflächenkontur K durch das Material des Trägers 2 sichtbar. Die Bezugsebene ist beispielsweise eine von den zwei orthogonalen Haupterstreckungsrichtungen X, Y des Trägers 2 aufgespannte Ebene, während die Höhenkoordinate eines Punktes auf der mit der Oberflächenkontur K versehenen Rückfläche 6 beispielsweise der in z-Richtung bestimmte orthogonale Abstand des Punktes der Oberflächenkontur K zu dieser Ebene ist.

Die bei der ersten Ausführungsform vorgesehene Effektschicht 3 ist bei der ersten Ausführungsform auf der Rückfläche 6 des Trägers 2 aufgebracht. Dabei ist die Effektschicht 3 so ausgebildet, dass für eine Vielzahl von Stellen der Effektschicht 3 Folgendes gilt: der lokale Transmissionsgrad an der jeweiligen Stelle der Effektschicht 3 korreliert mit der Höhenkoordinate desjenigen Punktes der Oberflächenkontur K, dessen senkrechte Projektion auf die Bezugsebene mit der senkrechten Projektion dieser jeweiligen Stelle der Effektschicht 3 auf die Bezugsebene zusammenfällt. Durch die spezifische, auf die Oberflächenkontur K der Rückfläche 5 angepasste Effektschicht 3 wird somit eine verbesserte optische Tiefenwirkung erreicht. Bei gleicher optischer Tiefenwirkung kann gegenüber einer unbedruckten Variante die mittlere Rautiefe der Oberflächenkontur K verringert werden, was weitergehend die Option einräumt, bei gleicher verbleibender Restdicke an der oder den Stellen der größten Tiefe Materialstärke am Träger 2 und damit Gewicht des Trägers 2 einzusparen. Dadurch, dass bei gleicher optischer Tiefenwirkung die mittlere Rautiefe der dreidimensionalen Oberflächenkontur K verringert werden kann, wird die Bruchgefahr des Trägers 2 und somit die Verletzungsgefahr verringert.

Ferner ist eine rückwärtig angeordnete, auf die Effektschicht 3 aufgebrachte, im Wesentlichen homogen ausgebildete, opake Reflexionsschicht 4 vorgesehen. Beispielsweise ist die Reflexionsschicht 4 im Wesentlichen weiß eingefärbt.

Es ist vorgesehen, dass sich zumindest die Stellen der Effektschicht 3, die mit den Punkten lokaler maximaler Höhenkoordinate der Oberflächenkontur K bei gemeinsamer senkrechte Projektion auf die Bezugsebene zusammenfallen und die Stellen der Effektschicht, die mit den Punkten lokaler minimaler Höhenkoordinate der Oberflächenkontur K bei gemeinsamer senkrechte Projektion auf die Bezugsebene zusammenfallen, im Transmissionsgrad unterscheiden. So ist an den Stellen der Effektschicht 3, denen jeweils die lokal tiefste Position der Oberflächenkontur K aufgrund der Projektion entspricht, ein hoher Transmissionsgrad zugeordnet und entsprechend den Stellen der Effektschicht 3, denen jeweils die lokal höchste Position der Oberflächenkontur K aufgrund der Projektion entspricht, ein niedriger Transmissionsgrad zugeordnet. Der unterschiedliche Transmissionsgrad wird beispielsweise durch unterschiedliche Druckdichte der die Effektschicht 3 ausbildenden Rasterbedruckung erreicht. Dadurch wird eine ausgeprägte optische Tiefenwirkung hervorgerufen, die die für den Betrachter durch den Träger 2 hindurch sichtbaren Talsenken aufgrund des Transmissionsgrad im Vergleich zu der verbleibenden Landschaft der Oberflächenkontur optisch heller und die durch den Träger 2 hindurch sichtbaren Gipfel oder Gipfelgrate entsprechend optisch dunkler erscheinen lässt.

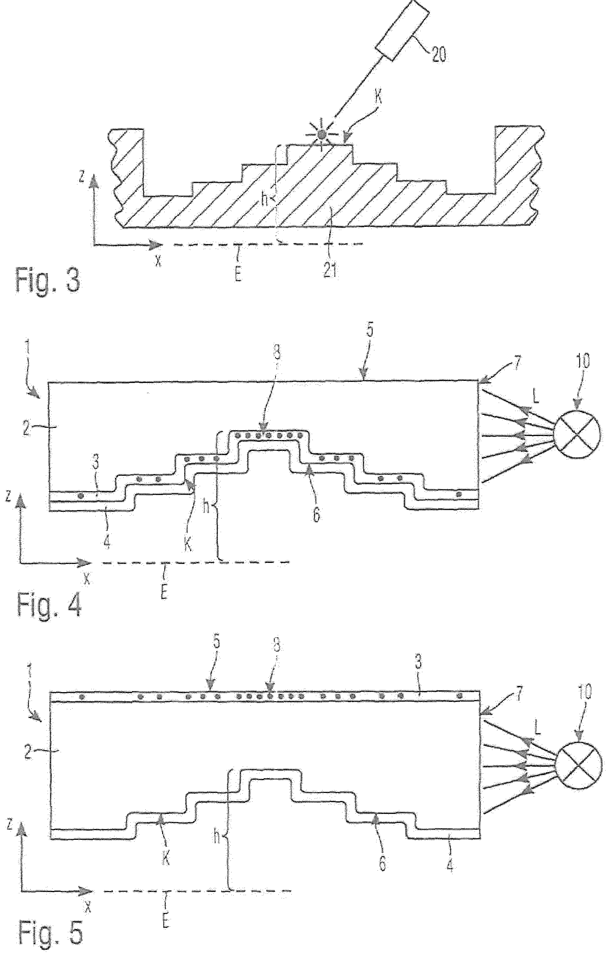

Offenbart ist ferner ein Verfahren zur Herstellung einer Dekorblende 1, wie sie in den nachfolgenden Figuren 4 und 5 gezeigt ist, mit den folgenden Schritten.

In einem Erzeugungsschritt wird der Träger 2 aus einem transluzenten oder transparenten Thermoplast hergestellt, der bei bestimmungemäßer Anbringung eine einem Betrachter zugewandte Sichtfläche 5 und eine dem Betrachter abgewandte Rückfläche 6 definiert, wobei die Rückfläche nicht zwingend die rückwärtig äußerste Oberfläche der Dekorblende sein muss. Der Träger 2 kann einteilig oder mehrteilig sein, beispielsweise ist er aus mehreren stoffschlüssig verbundenen Komponenten ausgebildet. Dabei wird mittels eines formgebenden Verfahrensschritts mittels eines formgebenden, in Figur 3 gezeigten Werkzeugs 21 der in den Figuren 4 und 5 gezeigte Träger 2 erzeugt, wobei zuvor mittels eines ablativen, in Figur 3 gezeigten Bearbeitungsschritts diejenige Oberfläche des Werkzeugs 21 mittels einer Laservorrichtung 21 ablativ bearbeitet wird, die beim Formgeben durch das Werkzeug 21, die

Rückfläche mit einer dreidimensionalen Oberflächenkontur K in den Träger 2 als Formling prägt, wenn der den Träger 2 ausbildende Thermoplast in die vom Werkzeug 21 ausgebildete Cavität eingebracht wird. Dabei ist die Oberflächenkontur K bezüglich einer Bezugsebene E durch eine Höhenkoordinate h beschreibbar. Die Bezugsebene E erstreckt sich beispielsweise parallel zu einer Ebene, die durch die zwei orthogonalen Haupterstreckungsrichtungen des Trägers 2 aufgespannt wird, welcher als Formling erhalten wird.

In einem mindestens einmalig durchgeführten Bedruckungsschritt des Verfahrens erfolgt, wie Figur 4 zeigt, ein Bedrucken der Rückfläche 6 des als Formling erhaltenen Trägers 2, um die Effektschicht 3 auszubilden, die so ausgebildet ist, dass für eine Vielzahl von Stellen der Effektschicht 3 Folgendes gilt: der lokale Transmissionsgrad an der jeweiligen Stelle der Effektschicht korreliert mit der Höhenkoordinate h desjenigen Punktes der Oberflächenkontur K, dessen senkrechte Projektion auf die Bezugsebene E mit der senkrechten Projektion dieser jeweiligen Stelle auf die Bezugsebene E zusammenfällt. Durch die spezifische auf die Oberflächenkontur K der strukturierten Oberfläche angepasste Bedruckung wird somit eine verbesserte optische Tiefenwirkung erreicht. Bei gleicher optischer Tiefenwirkung kann gegenüber einer unbedruckten Variante die mittlere Rautiefe der Oberflächenkontur verringert werden, was weitergehend die Option einräumt, bei gleicher verbleibender Restdicke zumindest an der Stelle der größten Tiefe Materialstärke am Träger 2 und damit Gewicht des Trägers 2 einzusparen. Dadurch, dass bei gleicher optischer Tiefenwirkung die mittlere Rautiefe der dreidimensionalen Oberflächenkontur K verringert werden kann, wird die Bruchgefahr des Trägers 2 und somit die Verletzungsgefahr verringert. Die Höhenkoordinate h kann beispielsweise anhand des Datensatzes zur Ansteuerung der Laserablationsvorrichtung gewonnen oder durch eine zusätzliche Oberflächenabtastung des Trägers 2 erhalten werden.

Es ist ferner ein Beschichtungsschritt vorgesehen, bei dem eine, bevorzugt im Wesentlichen homogen ausgebildete, opake Reflexionsschicht 4, rückwärtig, auf den Träger 2, genauer die äußere Effektschicht 3 aufgebracht wird, um die zweite Ausführungsform der Dekorblende 1 zu erhalten. Dabei ist die Reflexionsschicht 4 im Wesentlichen weiß eingefärbt. Es ist auch hier vorgesehen, dass sich zumindest die Stellen der Effektschicht 3, die mit den Punkten lokaler maximaler Höhenkoordinate h der Oberflächenkontur K bei gemeinsamer senkrechte Projektion auf die Bezugsebene E zusammenfallen und die Stellen der Effektschicht 3, die mit den Punkten lokaler minimaler Höhenkoordinate h der Oberflächenkontur K bei gemeinsamer senkrechte Projektion auf die Bezugsebene E zusammenfallen, im Transmissionsgrad unterscheiden. So ist an den Stellen der Effektschicht 3, denen jeweils die Position der Oberflächenkontur K mit lokal minimaler Höhenkoordinate h aufgrund der Projektion entspricht, ein hoher Transmissionsgrad zugeordnet und entsprechend den Stellen der Effektschicht 3 denen jeweils die Position der Oberflächenkontur K mit lokal maximaler Höhenkoordinate h aufgrund der Projektion entspricht, ein niedriger Transmissionsgrad zugeordnet. Der unterschiedliche Transmissionsgrad wird beispielsweise durch unterschiedliche Druckdichte der die Effektschicht 3 ausbildenden Rasterbedruckung erreicht. Dadurch wird eine ausgeprägte optische Tiefenwirkung hervorgerufen, da beim Durchblicken des Trägers 2 durch die Sichtfläche 5 auf die darunterliegende Rückfläche die Erhebungen 8 aufgrund des unterschiedlichen Transmissionsgrads im Vergleich zu der verbleibenden Landschaft der Oberflächenkontur K optisch dunkler und die Senken entsprechend optisch heller wirken. Bei der erfindungsgemäßen zweiten Anordnung ist wiederum eine Lichtquelle 10 vorgesehen, deren Licht L über die Stirnfläche 7 in den Träger 2 eingekoppelt wird.

Figur 5 zeigt im Schnitt eine dritte, erfindungsgemäße Anordnung aus einer Lichtquelle 10 und einer u.a. mittels des Werkzeugs 21 aus Figur 3 hergestellten Dekorblende 1 in einer dritten Ausführungsform.

Auch hier wird in einem Erzeugungsschritt der transparente oder transluzente Träger 2 hergestellt, der bei bestimmungemäßer Anbringung eine einem Betrachter zugewandte Sichtfläche 5 und eine dem Betrachter abgewandte Rückfläche 6 definiert, erzeugt, wobei die Rückfläche 6 nicht die rückwärtig äußerste Oberfläche der Dekorblende 1 ist. Dabei wird mittels eines formgebenden Verfahrensschritts mittels eines formgebenden, in Figur 3 gezeigten Werkzeugs 21 der Träger 2 als Formling in einer Cavität des Werkzeugs 21 erzeugt. Dabei ist die Oberflächenkontur K bezüglich einer Bezugsebene E durch eine Höhenkoordinate h beschreibbar. Die Bezugsebene E erstreckt sich beispielsweise parallel zu einer durch die zwei orthogonalen Haupterstreckungsrichtungen des Trägers 2 aufgespannten Ebene.

In einem mindestens einmalig durchgeführten Bedruckungsschritt des Verfahrens erfolgt, wie Figur 4 zeigt, ein Bedrucken der Sichtfläche 5 des Trägers 2, um die Effektschicht 3 auszubilden, die so ausgebildet ist, dass für eine Vielzahl von Stellen der Effektschicht 3 Folgendes gilt: der lokale Transmissionsgrad an der jeweiligen Stelle korreliert mit der Höhenkoordinate h desjenigen Punktes der Oberflächenkontur K, dessen senkrechte Projektion auf die Bezugsebene E mit der senkrechten Projektion dieser jeweiligen Stelle der Effektschicht 3 auf die Bezugsebene E zusammenfällt. Durch die spezifische auf die Oberflächenkontur K der strukturierten Oberfläche angepasste Bedruckung wird somit eine verbesserte optische Tiefenwirkung erreicht. Bei gleicher optischer Tiefenwirkung kann gegenüber einer unbedruckten Variante die mittlere Rautiefe der Oberflächenkontur verringert werden, was weitergehend die Option einräumt, bei gleicher verbleibender Restdicke zumindest an der oder den Stellen größter Tiefe Materialstärke am Träger 2 und damit Gewicht des Trägers 2 einzusparen. Dadurch, dass bei gleicher optischer Tiefenwirkung die mittlere Rautiefe der dreidimensionalen Oberflächenkontur K verringert werden kann, wird die Bruchgefahr des Trägers 2 und somit die Verletzungsgefahr verringert. Die Höhenkoordinate h kann beispielsweise anhand des Datensatzes zur Ansteuerung der Laserablationsvorrichtung gewonnen oder durch eine zusätzliche Oberflächenabtastung des Trägers 2 erhalten werden.

Es ist ferner ein Beschichtungsschritt vorgesehen, bei dem eine, bevorzugt im Wesentlichen homogen ausgebildete, opake Reflexionsschicht 4, rückwärtig, auf die Rückfläche 6 des Trägers 2 aufgebracht wird, um die dritte Ausführungsform der Dekorblende 1 zu erhalten. Dabei ist die Reflexionsschicht 4 im Wesentlichen weiß eingefärbt. Es ist auch hier vorgesehen, dass sich zumindest die Stellen der Effektschicht 3, die mit den Punkten lokaler maximaler Höhenkoordinate h der Oberflächenkontur K bei gemeinsamer senkrechte Projektion auf die Bezugsebene E zusammenfallen und die Stellen der Effektschicht 3, die mit den Punkten lokaler minimaler Höhenkoordinate h der Oberflächenkontur K bei gemeinsamer senkrechte Projektion auf die Bezugsebene E zusammenfallen, im Transmissionsgrad unterscheiden. So ist an den Stellen der Effektschicht 3, denen jeweils die Position der Oberflächenkontur K mit lokal minimaler Höhenkoordinate h aufgrund der Projektion entspricht, ein hoher Transmissionsgrad zugeordnet und entsprechend den Stellen der Effektschicht 3 denen jeweils die Position der Oberflächenkontur K mit lokal maximaler Höhenkoordinate h aufgrund der Projektion entspricht, ein niedriger Transmissionsgrad zugeordnet. Der unterschiedliche Transmissionsgrad wird beispielsweise durch unterschiedliche Druckdichte der die Effektschicht 3 ausbildenden Rasterbedruckung erreicht. Dadurch wird eine ausgeprägte optische Tiefenwirkung hervorgerufen, da die beim Durchblicken des Trägers 2 durch die Sichtfläche 5 auf die darunterliegende Rückfläche die Erhebungen 8 aufgrund des unterschiedlichen Transmissionsgrads im Vergleich zu der verbleibenden Landschaft der Oberflächenkontur K optisch dunkler und die Senken entsprechend optisch heller wirken. Bei der erfindungsgemäßen dritten Anordnung ist wiederum eine Lichtquelle 10 vorgesehen, deren Licht L über die Stirnfläche 7 in den Träger 2 eingekoppelt wird.

## Patentansprüche

1. Anordnung aus einer Lichtquelle (11) und einer Dekorblende (1), aufweisend:
einen transparenten oder transluzenten Träger (2), der zwei orthogonale Haupterstreckungsrichtungen (X,Y) mit zwei gegenüberliegenden Hauptflächen, die an Schmalseiten des Trägers (2) über Stirnflächen (7) verbunden sind, aufweist und bei bestimmungemäßer Anbringung eine einem Betrachter zugewandte Sichtfläche (5) und eine dem Betrachter abgewandte Rückfläche (6) definiert, wobei die Rückfläche (6) eine dreidimensionale Oberflächenkontur (K) ausbildet, die bezüglich einer von den zwei Haupterstreckungsrichtungen (X, Y) aufgespannte Bezugsebene (E) durch eine Höhenkoordinate (h) beschreibbar ist; und
wenigstens eine Effektschicht (3), die jeweils entweder auf der Rückfläche (6) oder der Sichtfläche (5) des Trägers (2) aufgebracht ist, **dadurch gekennzeichnet, dass** die Effektschicht (3) so ausgebildet ist, dass für eine Vielzahl von Stellen der Effektschicht (3) Folgendes gilt: der lokale Transmissionsgrad an der jeweiligen Stelle korreliert mit der Höhenkoordinate (h) desjenigen Punktes der Oberflächenkontur (K), dessen senkrechte Projektion auf die Bezugsebene (E) mit der senkrechten Projektion dieser jeweiligen Stelle der Effektschicht (3) auf die Bezugsebene (E) zusammenfällt,
dass eine der Stirnflächen (7) der Lichtquelle (10) zugewandt ist, um Licht (L) in den Träger (2) als Lichtleiter einzukoppeln und dass die Oberflächenkontur (K) aufgrund lichtbrechender Effekte durch den Träger (2) sichtbar ist.

2. Anordnung gemäß dem vorhergehenden Anspruch, ferner aufweisend eine rückwärtig auf den Träger (2) aufgebrachte, opake Reflexionsschicht (4).

3. Anordnung gemäß einem der vorhergehenden Ansprüche, wobei sich zumindest die Stellen der Effektschicht (3), die mit den Punkten lokaler maximaler Höhenkoordinate (h) der Oberflächenkontur (K) bei gemeinsamer senkrechte Projektion auf die Bezugsebene (E) zusammenfallen und die Stellen der Effektschicht (3), die mit den Punkten lokaler minimaler Höhenkoordinate (h) der Oberflächenkontur (K) bei gemeinsamer senkrechte Projektion auf die Bezugsebene (E) zusammenfallen, im Transmissionsgrad unterscheiden.

4. Anordnung gemäß einem der vorhergehenden Ansprüche, wobei der Träger (2) eine transparente Folie aus einem ersten Thermoplast und eine stoffschlüssig mit der Folie verbundene, transparente Schicht aus einem zweiten Thermoplast aufweist.

5. Anordnung gemäß einem der vorhergehenden Ansprüche, wobei die Effektschicht (3) durch eine Rasterbedruckung des Trägers (2) ausgebildet ist.

6. Anordnung gemäß einem der vorhergehenden Ansprüche, wobei mehrere der Stellen benachbart angeordnet sind und eine Transmissionsgradänderung mit der zugehörigen Höhenkoordinatenänderung positiv oder negativ korreliert.

## Claims

1. Arrangement comprising a light source (11) and a decorative panel (1), having:
a transparent or translucent carrier (2), which has two orthogonal main directions of extent (X, Y) with two opposite main surfaces, which are connected on narrow sides of the carrier (2) via end surfaces (7), and, in the case of attachment as intended, defines a visible surface (5) facing a viewer and a rear surface (6) facing away from the viewer, wherein the rear surface (6) forms a three-dimensional surface contour (K) which is describable by a height coordinate (h) with respect to a reference plane (E) defined by the two main directions of extent (X, Y); and
at least one effect layer (3) applied in each case either to the rear surface (6) or to the visible surface (5) of the carrier (2), **characterized in that** the effect layer (3) is designed such that the following applies to a multiplicity of locations of the effect layer (3): the local transmittance at the respective location correlates with the height coordinate (h) of that point of the surface contour (K), the perpendicular projection of which onto the reference plane (E) coincides with the perpendicular projection of this respective location of the effect layer (3) onto the reference plane (E),
**in that** one of the end surfaces (7) faces the light source (10) in order to couple light (L) into the carrier (2) as a light guide, and **in that** the surface contour (K) is visible through the carrier (2) on account of refractive effects.

2. Arrangement according to the preceding claim, furthermore having an opaque reflection layer (4) applied to the rear of the carrier (2).

3. Arrangement according to either of the preceding claims, wherein at least those locations of the effect layer (3), which coincide with the points of local maximum height coordinate (h) of the surface contour (K) in the case of a common perpendicular projection onto the reference plane (E), and those locations of the effect layer (3), which coincide with the points of local minimum height coordinate (h) of the surface contour (K) in the case of a common perpendicular projection onto the reference plane (E), differ in terms of transmittance.

4. Arrangement according to one of the preceding claims, wherein the carrier (2) has a transparent film composed of a first thermoplastic and a transparent layer composed of a second thermoplastic which is cohesively bonded to the film.

5. Arrangement according to one of the preceding claims, wherein the effect layer (3) is formed by raster printing of the carrier (2).

6. Arrangement according to one of the preceding claims, wherein a plurality of the locations are arranged adjacently, and a transmittance change correlates positively or negatively with the associated height coordinate change.

## Revendications

1. Arrangement constitué d'une source de lumière (11) et d'un cache décoratif (1), possédant :
un support (2) transparent ou translucide, qui présente deux directions d'extension principales (X, Y) orthogonales avec deux surfaces principales opposées, qui sont reliées à des côtés étroits du support (2) par des surfaces frontales (7) et, dans le cas d'une mise en place conforme à la destination, définit une surface visible (5) qui fait face à un observateur et une surface arrière (6) tournée à l'opposé de l'observateur, la surface arrière (6) formant un contour de surface tridimensionnel (K) qui peut être décrit par une coordonnée de hauteur (h) en référence à un plan de référence (E) englobé par les deux directions d'extension principales (X, Y) ; et
au moins une couche d'effet (3), qui est appliquée respectivement soit sur la surface arrière (6), soit sur la surface visible (5) du support (2), **caractérisé en ce que** la couche d'effet (3) est configurée de telle sorte que ce qui suit s'applique à une pluralité d'emplacements de la couche d'effet (3) : le facteur de transmission local au niveau de l'emplacement respectif est corrélé avec la coordonnée de hauteur (h) du point du contour de surface (K) dont la projection perpendiculaire sur le plan de référence (E) coïncide avec la projection perpendiculaire de cet emplacement respectif de la couche d'effet (3) sur le plan de référence (E),
**en ce que** l'une des surfaces frontales (7) fait face à la source de lumière (10) afin d'injecter par couplage de la lumière (l) dans le support (2) en tant que guide de lumière, et **en ce que** le contour de surface (K) est visible à travers le support (2) en raison des effets de réfraction.

2. Arrangement selon la revendication précédente, possédant en outre une couche réfléchissante opaque (4) appliquée à l'arrière sur le support (2).

3. Arrangement selon l'une des revendications précédentes, au moins les emplacements de la couche d'effet (3) qui coïncident avec les points de coordonnée de hauteur (h) locale maximale du contour de surface (K) dans le cas d'une projection perpendiculaire commune sur le plan de référence (E) et les emplacements de la couche d'effet (3) qui coïncident avec les points de coordonnée de hauteur (h) locale minimale du contour de surface (K) dans le cas d'une projection perpendiculaire commune sur le plan de référence (E), se différenciant par leur facteur de transmission.

4. Arrangement selon l'une des revendications précédentes, le support (2) possédant une feuille transparente constituée d'une première matière thermoplastique et une couche transparente constituée d'une deuxième matière thermoplastique qui est liée à la feuille par fusion de matières.

5. Arrangement selon l'une des revendications précédentes, la couche d'effet (3) étant formée par une impression matricielle du support (2).

6. Arrangement selon l'une des revendications précédentes, plusieurs des emplacements étant disposés côte à côte et un changement de facteur de transmission étant corrélé positivement ou négativement avec le changement de coordonnée de hauteur associé.
